# DEMANDE DE BREVET EUROPEEN

(11) **EP 1 641 209 A1**
(43) Date de publication de la demande: **29.03.2006**
(21) Numéro de dépôt: 04292309.4
(22) Date de dépôt: 27.09.2004
(51) Int. Cl.: H04L 29/06, H04L 29/08

(54) **Passerelle d'adaption pour transmission de flux audio-vidéo dans un réseau de communication**

(71) Demandeur: ALCATEL, 75008 Paris (FR)
(72) Inventeur: Mathieu, Guy, 91400 Orsay (FR); Van de Vegte, Ernst-Jan, 2497 TJ Den Haag (NL)
(74) Mandataire: Chaffraix, Sylvain

(57) **Abrégé**

Passerelle d'adaptation (PA) de flux audio-vidéo permettant la transmission de flux audio-vidéo véhiculés au travers d'un réseau de communication de données depuis au moins une source (S) jusque à au moins un terminal (T) connecté à la passerelle, et comportant des moyens d'adaptation (MA) pour convertir les flux audio-vidéo (F₁) reçus de la source en des flux adaptés (F₂) avant transmission vers le terminal (T). La passerelle se caractérise en ce qu'elle comporte en outre des moyens de gestion (MG) prévus pour recevoir d'un serveur distant (B), des informations d'adaptation (I_{A}) relatives à l'interface homme-machine du terminal et/ou aux utilisateurs de ce terminal, et pour paramétrer les moyens d'adaptation (MA) en fonction de ces informations d'adaptation (I_{A}).

## Description

La présente invention concerne une passerelle pour la transmission et l'adaptation de flux multimédia. Elle s'applique particulièrement bien à la transmission et à l'adaptation de flux audio/vidéo véhiculés par un réseau de données de type « Internet ».

De nos jours, des événements majeurs comme les grandes manifestations sportives (Jeux olympiques, coupes du monde de football, grand prix de formule 1 etc.) génèrent des taux d'audience records parmi les possesseurs de télévisions.

Toutefois, la télévision ne forme pas un moyen de diffusion susceptible de répondre à l'ensemble de la demande des clients.

Tout d'abord, cette demande se diversifie et le client peut vouloir accéder à la diffusion de ces événements depuis une télévision classique, mais aussi depuis un terminal mobile de communication, depuis un ordinateur ou tout autre terminal possédant les capacités d'affichage vidéo et rendu audio nécessaires.

Par ailleurs, le réseau de télévision ne dispose que d'un nombre de canaux limité. Aussi, le client ne peut accéder qu'aux émissions proposées par le fournisseur du service télévisuel. Il est donc limité au choix effectué par ce fournisseur. Généralement, ce choix dépend du pays du fournisseur de service et est fonction des intérêts majoritaires manifestés par les habitants de ce pays : ainsi, les épreuves de « Base-ball » des jeux olympiques seront bien diffusées aux Etats-Unis mais peu en France où ce sport est peu populaire. De même, une épreuve sera davantage diffusée par un fournisseur d'un pays si ce pays possède une équipe ou des sportifs susceptibles de remporter une médaille.

Toutefois, on peut comprendre qu'individuellement les clients ne peuvent se satisfaire du choix effectué pour la majorité.

Une alternative, actuellement en cours de développement, consiste à transmettre les émissions par le réseau internet. Toutefois, cette solution, qui se développe peu à peu, est encore insuffisante.

Notamment, elle ne prend pas suffisamment en compte la multiplicité des types de terminaux audio-vidéo sur le marché actuel ou futur. Aussi, un fournisseur de contenu doit mettre à la disposition des clients différentes sources correspondant à ces différents types de terminaux. Une telle solution présente toutefois de nombreuses déficiences :

Tout d'abord, elle multiplie le nombre de sources, c'est-à-dire typiquement un fichier de données audio-video sur un serveur ou bien un flux audio-vidéo transmis en temps-réel par le fournisseur de contenu. De plus, elle oblige ce fournisseur de contenu à fournir le travail supplémentaire de créer cette multitude de source à partir d'une source originale. Cette solution engendre donc une sur-occupation des ressources du fournisseur de contenu. De fait, certains fournisseurs proposent quelques formats (Windows Multimedia Format, Quicktime™, RealVideo™) mais le choix n'est pas très important.

Ensuite, elle nécessite une étape supplémentaire pour le client de choisir la source appropriée. De ce fait, une telle solution n'est pas très ergonomique et peut impliquer que le client ait une connaissance technique minimale des capacités de son terminal pour déterminer quelle source est la mieux adaptée à son terminal audio-vidéo.

Par ailleurs, une telle approche est entièrement statique. Aucune adaptation n'est possible si les capacités du terminal audio-vidéo changent en cours de diffusion (par exemple si le client qui regardait un film sur son ordinateur en mode-écran décide de le réduire à une fenêtre.)

Il existe par ailleurs des « passerelles media » dont l'objet est de convertir un flux audio-vidéo entre un réseau de communication de type «voix » et un réseau de communication de données. Elles disposent pour ce faire de codeur/décodeur (CODEC) qui transforment les données d'un format en un autre. Grâce à l'usage de « Softswitchs » ou d'autres dispositifs de signalisation, ces passerelles médias peuvent prendre en compte les capacités du terminal destinataire dans le choix du Codec approprié et de ses paramètres.

Toutefois, il s'agit là uniquement de trouver un encodage compréhensible par le terminal destinataire. Or, la capacité pour un terminal d'accepter un encodage donné ne signifie rien sur sa capacité à le produire sur son interface homme-machine.

Il est clair que bien qu'un ordinateur possédant un écran 21 pouces et un assistant numérique personnel peuvent accepter les mêmes formats, ils ne peuvent toutefois pas accepter les mêmes flux audio-vidéo transmis selon ces formats.

Le but de la présente invention est de pallier ces différents problèmes de solutions actuellement disponibles dans l'état de la technique.

Pour ce faire l'invention a pour premier objet une passerelle d'adaptation de flux audio-vidéo permettant la transmission de flux audio-vidéo véhiculés au travers d'un réseau de communication de données depuis au moins une source jusque à au moins un terminal audio-vidéo connecté à la passerelle, et comportant des moyens d'adaptation pour convertir les flux audio-vidéo reçus de l'au moins une source en des flux adaptés avant transmission vers le ou les terminaux.

La passerelle d'adaptation de l'invention se caractérise en ce qu'elle comporte en outre des moyens de gestion prévus pour recevoir d'un serveur distant, des informations d'adaptation relatives à l'interface homme-machine du ou des terminaux et/ou aux utilisateurs du ou des terminaux, et pour paramétrer les moyens d'adaptation en fonction de ces informations d'adaptation.

Ainsi, la passerelle d'adaptation selon l'invention permet d'adapter les flux audio-vidéos aux interfaces homme-machine des terminaux audio-vidéo ainsi qu'à des paramètres liés à l'utilisateur de ce terminal. Cette passerelle permet donc d'une part d'éviter la multiplication des sources, et d'autre part de ne pas proposer un choix limité par le fournisseur de contenu, mais au contraire ouvert à tout type actuel et futur de terminaux audio-vidéo. Enfin, elle permet aussi une adaptation dynamique des flux audio-vidéo.

Selon un mode de réalisation de l'invention, la passerelle d'adaptation possède en outre des moyens d'ajout permettant l'ajout d'insertions dans les flux adaptés transmis audit ou auxdits terminaux.

Selon une mise en oeuvre, un premier moyen d'ajout est disposé en amont du moyen d'adaptation afin d'ajouter une ou plusieurs insertions sous la forme de flux audio-vidéo secondaires dans les flux audio-vidéo, de sorte que le ou les flux audio-vidéo secondaires soient adaptés par les moyens d'adaptation de la même façon que les flux audio-vidéo.

Selon une mise en oeuvre de l'invention, un second moyen d'ajout est disposé en aval du moyen d'adaptation afin d'ajouter une ou plusieurs insertions sous la forme de bandeaux ou d'images fixes dans les flux adaptés.

Ces moyens d'ajout peuvent être aptes à récupérer les insertions depuis une base d'insertion, préférablement distante de la passerelle d'adaptation.

Selon un mode de réalisation particulier, les moyens de gestion déterminent les insertions ajoutées par les moyens d'ajout en fonction d'un taux contenu dans les informations d'adaptation, balançant le nombre et/ou la durée des insertions et la tarification de la transmission du flux audio-vidéo.

Selon un mode de réalisation particulier, les moyens de gestion déterminent les insertions ajoutées par les moyens d'ajout en fonction d'un profil des centres d'intérêts du ou des utilisateurs, contenu dans les informations d'adaptation.

Selon un mode de réalisation particulier, l'invention peut résoudre aussi le problème technique supplémentaire de prendre en compte dynamiquement les changements de la disponibilité du réseau de communication durant la transmission.

Pour ce faire, les moyens de gestion sont également prévus pour recevoir des informations de qualité de service émises par un dispositif de mesure de performances, représentatives au moins d'informations de performances relatives au réseau de communication connectant ladite passerelle d'adaptation audit ou auxdits terminaux.

Selon une mise en oeuvre possible, les moyens de gestions sont aptes à recevoir des informations de qualité de service également représentatives d'informations de performance provenant dudit ou desdits terminaux.

L'invention a également pour objet un réseau de communication permettant la transmission de flux audio-vidéo entre une ou plusieurs sources et un ou plusieurs terminaux, mettant en oeuvre une passerelle d'adaptation. Plus précisément, l'invention a pour second objet un réseau de communication pour la transmission de flux audio-vidéo depuis au moins une source jusqu'à au moins un terminal audio-vidéo, au travers d'une passerelle d'adaptation comportant des moyens d'adaptation pour convertir les flux audio-vidéo reçus de ladite au moins une source en des flux adaptés avant transmission vers le ou les terminaux.

Un tel réseau de communication selon l'invention se caractérise en ce que la passerelle d'adaptation comporte en outre des moyens de gestion prévus pour recevoir d'un serveur distant, des informations d'adaptation relatives à l'interface homme-machine du ou des terminaux et/ou aux utilisateurs du ou des terminaux, et pour paramétrer les moyens d'adaptation en fonction de ces informations d'adaptation.

Selon un mode de réalisation, le serveur distant dispose de moyen pour recevoir des informations d'un portail, notamment un site web, et pour déterminer les informations d'adaptation à partir de ces informations reçues.

Selon un mode de réalisation, le serveur distant dispose de moyen pour recevoir des informations du au moins un terminal, par un protocole de signalisation, et pour déterminer les informations d'adaptation à partir de ces informations reçues.

Enfin, l'invention a également pour objet un procédé mettant en oeuvre une passerelle d'adaptation selon l'invention. Plus précisément, l'invention a pour troisième objet un procédé de transmission de flux audio-video au travers d'un réseau de communication de données depuis au moins une source jusqu'à au moins un terminal audio-vidéo, consistant à faire passer les flux audio-vidéo par une passerelle d'adaptation comportant des moyens d'adaptation pour convertir les flux audio-vidéo reçus de l'au moins une source en des flux adaptés avant transmission vers le ou les terminaux.

Ce procédé selon l'invention se caractérise en ce que des moyens d'adaptation au sein de la passerelle d'adaptation vont chercher sur un serveur distant des informations d'adaptation relatives à l'interface homme-machine du ou des terminaux et/ou aux utilisateurs du ou des terminaux et paramètrent les moyens d'adaptation en fonction de ces informations.

La présente invention et ses avantages apparaîtront de façon plus claire dans la description qui va suivre en liaison avec les figures annexées.
La figure 1 représente une mise en oeuvre de la passerelle d'adaptation selon l'invention.
La figure 2 représente une seconde mise en oeuvre de la passerelle d'adaptation selon l'invention.
La figure 3 illustre un réseau de communication mettant en oeuvre la passerelle d'adaptation selon l'invention.
La figure 4 schématise une mise en oeuvre particulière de l'invention, incorporant un dispositif de mesure de performances.
La figure 5 illustre l'architecture interne du moyen d'adaptationd'une passerelle d'adaptation selon l'invention.

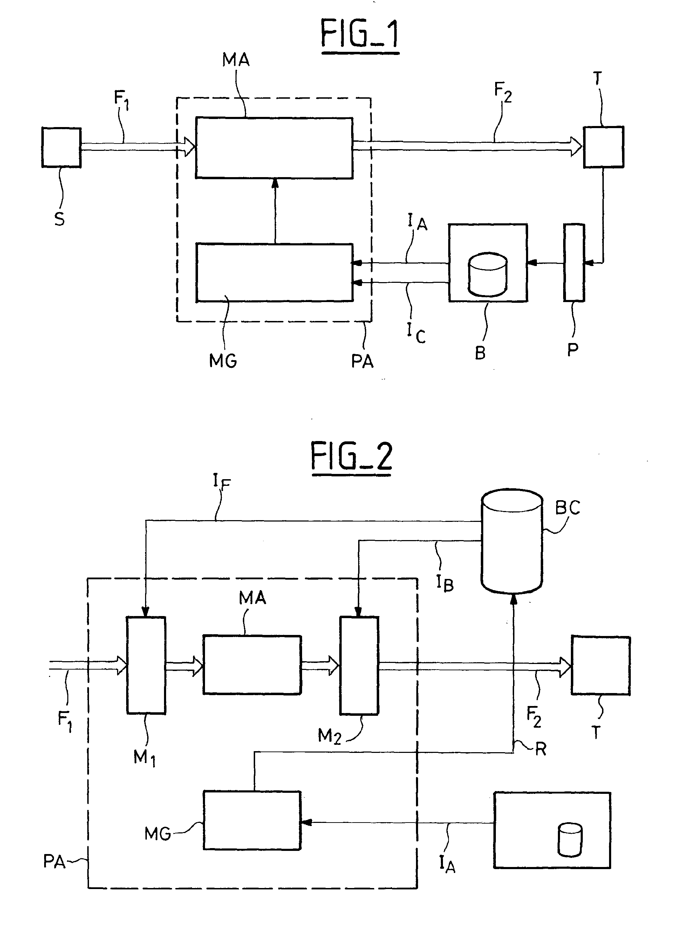

Dans l'exemple illustré par la figure 1, la passerelle d'adaptation PA transmet un flux audio-vidéo entre une source (ou un ensemble de sources) S et un terminal audio-vidéo T (ou un ensemble de terminaux). Le flux audio-vidéo F₁ entrant dans la passerelle PA est adapté par celle-ci en un flux (audio-vidéo) adapté F₂ qui est transmis au terminal T.

Cette adaptation est effectuée en fonction d'informations d'adaptation relatives à l'interface homme-machine du terminal T et/ou de son ou de ses utilisateurs.

Les informations relatives à l'interface homme-machine de terminal peuvent comprendre :
- la taille de l'écran,
- un nombre d'images par secondes,
- un nombre de couleurs ?
- ...

Ces informations peuvent être complétées (et modifiées) par l'utilisateur du terminal qui peut avoir des besoins propres. Ces informations peuvent concerner :
- la couleur du flux vidéo (même si un écran peut rendre de la couleur, un utilisateur peut préférer une version en noir et blanc, plus reposante pour les yeux).
- La langue
- Un sous-titrage
- Une qualité audio

Ces différentes informations peuvent être entrées par l'utilisateur par l'intermédiaire d'un portail P

Ce portail P est typiquement un site web, sur lequel il peut d'une part choisir le flux audio-vidéo qui l'intéresse, mais aussi ces informations vues plus haut qui vont influer l'adaptation du flux sélectionné par la passerelle d'adaptation PA.

Les deux types informations peuvent alors être transmis sur un serveur distant B ou serveur de profils d'utilisateurs. Ce serveur peut être situé sur un même site que le portail P ou bien sur un site différent. Dans ce dernier cas, tous les deux peuvent communiquer par le réseau de communication. Quoiqu'il en soit, le serveur distant B dispose de moyens pour recevoir des informations provenant du portail P, par exemple d'une interface HTTP.

Ce serveur distant B peut mémoriser les informations reçues depuis le portail dans une base de données.

Selon un autre mode de réalisation, le terminal peut communiquer avec le serveur distant B par l'intermédiaire d'un protocole de signalisation tel le protocole SIP (Session *Initiation Protocol*), défini par le RFC 3261 de l'IETF (Internet Engineering Task Force) et issu des travaux du groupe de travail «Muliparty Multimedia Session Control » H.323 de l'ITU (International Telecommunication Union) ou d'autres protcoles de la famille H.32x de l'ITU comme H.324M.

La communication entre le portail P et le serveur distant B peut également être effectuée selon un tel protocole de signalisation.

Le serveur distant B dispose alors de moyens pour recevoir des informations selon un protocole de signalisation, c'est-à-dire d'une interface SIP, H.323 notamment.

Une fois un flux audio-vidéo sélectionné par l'utilisateur, un message de signalisation est donc transmis (par le portail P ou le terminal T) contenant la sélection de l'utilisateur. Ce message de signalisation est reçu par le serveur distant B qui, en fonction de la sélection effectuée par l'utilisateur, aiguille le message de signalisation vers la source S appropriée.

Pour ce faire, le serveur B dispose d'une base de données permettant de mettre en correspondance les sélections possibles et les sources associées (avec éventuellement les paramètres appropriées). Par exemple, la base de données pourra fournir l'adresse du serveur « tennis » (adresse IP du serveur, port etc.) à partir d'une sélection de type « fienniscours1@jeuxpekin.FT.fr » indiquant que l'utilisateur veut recevoir le flux audio-vidéo correspondant au cours de tennis numéro 1, durant les jeux olympiques de 2008 de Pékin (Beijing).

Selon une autre mise en oeuvre de l'invention, la signalisation peut être transmise à travers la passerelle d'adaptation PA. Celle-ci analyse la description technique du flux audio-vidéo demandée (capacités de l'interface homme-machine du terminal etc.) et peut la compléter avec ses propres capacités d'adaptation (ses Codec disponibles etc.). Le message de signalisation est ensuite transmis par la passerelle d'adaptation PA au serveur distant B qui l'aiguille vers la source S appropriée de la même façon que précédemment.

À la réception du message de signalisation, la source S émet le flux audio-vidéo F₁ demandé dans le réseau de communication.

La source S peut fournir un flux temps-réel, ou bien un flux différé provenant d'un fichier informatique mémorisé sur un serveur associé à cette source. On verra plus tard que cette source peut donc être une plate-forme de production audio-vidéo, par exemple situé sur le site même d'un événement majeur comme jeux olympiques, coupes du monde etc. ou bien un serveur de réplication, éventuellement distant de ce site, servant à mémoriser temporairement ces flux audio-vidéo.

Ce flux audio-vidéo F₁ est encodé suivant un premier format d'encodage et suivant certaines caractéristiques, notamment de taille de chaque image, de nombres d'images par secondes etc. Préférentiellement, ces caractéristiques correspondent à une haute qualité.

Selon un premier mode de réalisation, le serveur distant B transmet à la passerelle P_{A} les paramètres nécessaires à la réception du flux audio-video F₁ demandé, et à son adaptation en un flux audio-vidéo F₂ adapté et transmis au terminal T. Selon un autre mode de réalisation, le serveur distant B adapte les descripteurs de flux audio-vidéo transmis via le protocole de signalisation SIP-SDP (« *Session Description* Protocol » défini par le RFC 2327) ou H.323-H.245.

Pour ce faire, le serveur de profils d'utilisateur B possède une vue du réseau de communication et de la configuration de la passerelle d'adaptation PA. Il est donc capable de déterminer le port d'entrée du flux audio-vidéo F₁ sur la passerelle PA, ainsi que le port de sortie du flux audio-vidéo adapté F₂. Cette configuration peut être déterminée manuellement, par exemple lors de l'installation de la passerelle d'adaptation PA, et être mise à jour régulièrement.

Ces paramètres contiennent notamment des informations de configuration I_{C} un port d'entrée à ouvrir pour laisser entrer le flux audio-vidéo F₁ dans la passerelle d'adaptation P_{A} et un port de sortie vers lequel acheminer le flux audio-vidéo adapté F₂ pour le diriger vers le terminal T.

Ces paramètres contiennent aussi tout ou partie des informations d'adaptation I_{A}, c'est-à-dire des informations relatives à l'interface homme-machine du terminal T et des informations relatives à son utilisateur. Ces informations peuvent provenir directement du terminal T ou bien avoir été mémorisées dans la base de données associée au serveur distant B.

Les informations d'adaptation I_{A} sont transmises par le serveur B à des moyens de gestion MG contenus dans la passerelle d'adaptation PA.

Les moyens de gestion MG paramètrent alors les moyens d'adaptation MA en fonction de ces informations d'adaptation I_{A}.

Ces moyens d'adaptation sont par exemple constitués d'un ensemble de codeurs-décodeurs (CODEC). La figure 5 schématise une mise en oeuvre possible des moyens d'adaptation MA. Un ensemble de n codeurs-décodeurs C₁, C₂, C₃... Cₙ sont connectés d'une part à des moyens d'entrée ME et d'autre part à des moyens de sortie MS. Chacun de ces codeurs-décodeurs peut implémenter des algorithmes différents et/ou peut avoir des caractéristiques qui le rende mieux adaptés pour certaines combinaisons de caractéristiques du flux audio-vidéo F₁ et d'adaptation demandée. Ces codeurs-décodeurs peuvent être implémentés par des algorithmes informatiques déployés sur un moyen d'exécution générique, ou bien par des algorithmes associés à des cartes contenant des équipements électriques spécifiques (des DSP pour « Digital Signal Processor ») qui réalisent ces adaptations et conversions.

Les flux audio-vidéo F₁ arrivent sur les moyens d'entrées ME.

Les moyens de gestion MG paramètrent les moyens d'entrées ME, afin qu'ils dirigent les flux entrants F₁ vers un codeur-décodeur particulier. Ces mêmes moyens de gestion MG peuvent également transmettre au codeur-décodeur en question, des paramètres supplémentaires afin d'influer sur l'algorithme qu'ils mettent en oeuvre et sur les caractéristiques du flux audio-vidéo adapté F₂ à produire. Ces flux audio-vidéos adaptés sont ensuite transmis à des moyens de sortie MS apte à les transmettre à destination du terminal T.

Notamment, de façon connue en soi, ces codeurs-décodeurs peuvent inclure différentes implémentations des algorithmes issus des travaux du MPEG (Motion Picture Expert Group) dans ses différentes versions, notamment MPEG-1 (ISO/IEC-11172), MPEG-2 (ISO/IEC-13818) et MPEG-4 (ISO/IEC-14496) pour ce qui concerne la vidéo. D'autres exemples de Codec sont ceux définis par les recommandations H.261 et H.263 de l'ITU-T.

Pour ce qui concerne la voix, de très nombreux Codecs ont également été définis. Il peut s'agir de Codecs tels que ceux définis par la norme DVD (*Digital Video Disc*)*.* Il peut aussi s'agir de la norme MP3.

L'ITU (International Telecommunication Union) a également défini de nombreux Codecs audio dans sa série G.7xx.

Les Codec utilisés par la source S sont sélectionnés pour avoir la meilleure qualité demandée possible (par exemple, vidéo MPEG 2 et audio en qualité DVD avec un fort taux d'échantillonnage). Par contre, les Codecs utilisés par les terminaux ou la taille des images pouvant être affichées sur l'interface homme-machine des terminaux sont des caractéristiques définies par les constructeurs de ces terminaux.

Le choix du Codec par la passerelle d'adaptation PA peut donc être effectué en fonction des caractéristiques du terminal T, ainsi que - selon un mode de réalisation de l'invention - de paramètres de qualité de service mesurés sur le réseau de communication.

Le tableau ci-dessous donne l'influence de la taille de l'image sur la bande passante nécessaire :

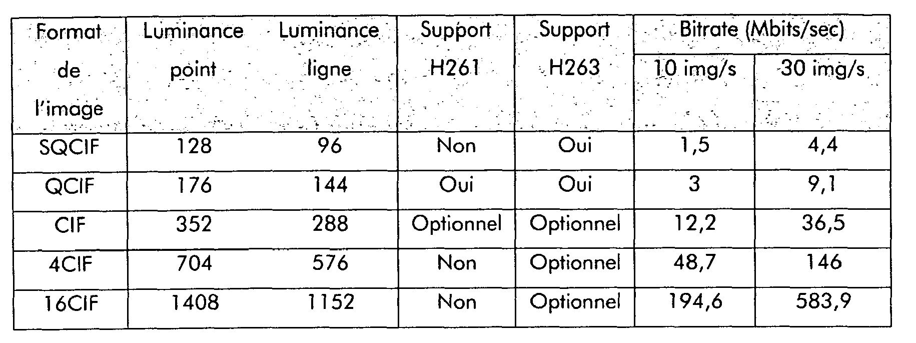

La colonne « format de l'image » donne la taille de l'image selon un format défini et normalisé. CIF est l'acronyme de « Common Intermediate Format » et définit une image de 352 lignes par 288 colonnes. Les autres formats sont définis à partir de ce format intermédiaire CIF. Ainsi :
- QCIF signifie « Quarter CIF » et définit une image de 176×144
- SQCIF signifie « Sub Quarter CIF » et définit une image de 128x96
- 4CIF définit une image de 704x576
- 16CIF définit une image de 1408x1152 pixels.

En plus de l'influence de la taille de l'image, des algorithmes de compression sont utilisés pour limiter la bande passante nécessaire à la transmission de l'information. Par exemple, pour le son, le Codec G.71 1 Alaw demande une bande passante de 64 kbits/s ou 56 bits/s tandis que le Codec GSM holf-rate demande une bande passante que de 5,6 kbits/s.

La figure 2 illustre un mode de réalisation de l'invention, mettent en oeuvre l'ajout d'insertions dans un flux audio-vidéo principal. Ces insertions peuvent notamment avoir un objet publicitaire. Il peut s'agir de films, c'est-à-dire de flux audio-vidéo secondaires, ou bien de bandeaux, d'images fixes etc.

Les moyens de gestion MG de la passerelle d'adaptation MA déterminent quand insérer ces flux secondaires, ainsi que leur type, en fonction notamment des informations d'adaptation I_{A}.

Notamment en fonction du type de terminal, les moyens de gestion peuvent choisir un film (pour un terminal possédant une interface homme-machine évoluée) ou un bandeau ou une image fixe (pour un terminal tel qu'un assistant numérique personnel (PDA, pour Personal Digital Assistant, en anglais). Ce bandeau peut être un bandeau défilant en bas ou en haut de l'écran. Il peut être opaque ou transparent, et sa taille peut varier en fonction des informations d'adaptation I_{A}, de la nature de la publicité (s'il s'agit d'une publicité), du contrat commercial liant l'utilisateur au fournisseur de service, etc.

Deux moyens d'ajout M₁, M₂ sont disposés respectivement en amont et en aval des moyens d'adaptation MA. Le premier moyen d'ajout M₁ permet l'ajout de flux audio-vidéos secondaires dans les flux audio-vidéos primaires. Le flux audio-vidéo combinant ces deux flux est ensuite transmis aux moyens d'adaptations M_{A}, de sorte qu'ils seront identiquement adaptés en un flux audio-vidéo adapté, c'est-à-dire par le même CODEC avec les mêmes paramètres. Le second moyen d'ajout M₂, quant à lui, permet l'ajout d'images fixes, ou de bandeaux, qui ne nécessitent pas d'être adapté par un des CODEC des moyens d'adaptation MA.

Ces insertions sont mémorisées dans une base d'insertions BC qui peut être contenue dans la passerelle d'adaptation PA ou extérieure à elle. Cette base dispose de moyens pour recevoir des requêtes R de la part des moyens de gestion MG lui indiquant une insertion particulière à extraire et des moyens pour transmettre l'insertion particulière extraite aux moyens d'ajout M₁ et M₂. Cette insertion peut être un flux audio-vidéo I_{F}, transmis aux premiers moyens d'ajout M₁ ou bien un bandeau, une image fixe... I_{B}, c'est-à-dire une insertion ne nécessitant pas une adaptation, transmis aux seconds moyens d'ajout M₂.

Selon un mode de réalisation de l'invention, un identificateur peut être inséré par le fournisseur de contenu, au sein des flux audio-vidéo disponibles à la source S. Ces indicateurs précisent les endroits du flux audio-vidéo F₁ où peuvent être ajoutés des insertions publicitaires. Elles peuvent également fournir des informations supplémentaires permettant de préciser le contenu des insertions publicitaires (le type de produits, un ou plusieurs produits particuliers...), la longueur de l'insertion (par exemple, un nombre de secondes, ou un nombre d'insertion élémentaire...) etc.

Si les indications sont précises, les moyens de gestion MG détermineront dans la base d'insertion BC, la ou les insertions particulières à ajouter à partir de ces indications précises.

Si ce n'est pas le cas, ils pourront déterminer cette insertion particulière (ou ces insertions particulières) à partir des informations d'adaptation I_{A}.

Préférentiellement, la base d'insertions BC est distante de la passerelle d'adaptation PA. Ainsi, une même base d'insertions peut être utilisée par plusieurs passerelles d'adaptations.

Selon un mode de réalisation, l'utilisateur du terminal peut choisir un taux balançant le nombre et/ou la durée des insertions (films publicitaires, bandeaux, images fixes...insérés) et la tarification de la transmission du flux principal. Ainsi, l'utilisateur peut choisir de payer davantage afin de recevoir moins d'insertions publicitaires ou inversement de payer moins mais de recevoir davantage d'insertions publicitaires.

Dans ce cas, les informations d'adaptation I_{A} contiennent une valeur représentative de ce taux, afin que les moyens de gestion déterminent si, lorsqu'un indicateur est détecté dans le flux audio-vidéo F₁, des insertions doivent être récupérées dans la base d'insertion BC et ajouté, et en quel nombre.

Il est également possible de prendre en compte un profil des centres d'intérêt de l'utilisateur du terminal pour déterminer une insertion à ajouter. Ce profil peut être déterminé par l'utilisateur lui-même, notamment grâce au portail P, ou bien être construit à partir des différents choix de diffusion opérés par cet utilisateur. Ainsi, si un utilisateur donné sélectionne principalement des matchs de tennis, alors les moyens de gestion MG pourront privilégier les insertions relatives à ce sport. De même, si l'utilisateur sélectionne principalement des compétitions mettant en jeu une nation particulière, les moyens de gestion MG pourront privilégier des insertions relatives à cette nation, concernant le sport ou non.

Il peut également est offert à l'utilisateur la possibilité de choisir le type d'insertion qu'il souhaite. Ainsi, si cela n'est pas explicitement précisé dans les identificateurs contenus dans le flux audio-vidéo F₁ reçu, les moyens de gestion MG peuvent choisir entre un film, un bandeau, une fenêtre... en fonction des desiderata de l'utilisateur et des capacités de l'interface homme-machine du terminal T.

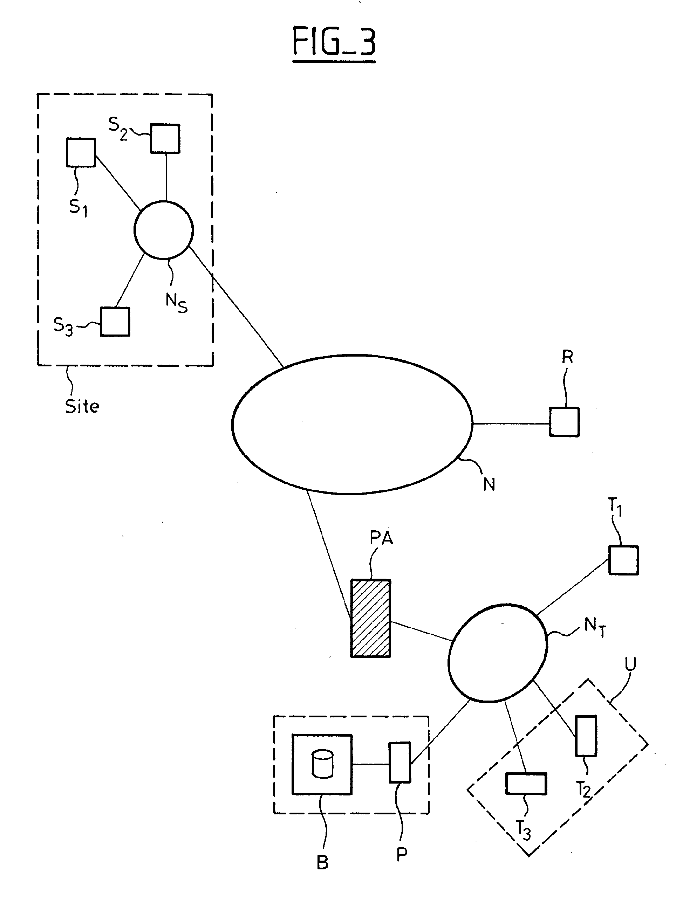

La figure 3 schématise un réseau de communication mettant en oeuvre une passerelle d'adaptation PA. Comme précédemment, cette passerelle d'adaptation reçoit des informations de la part d'un serveur distant B. Des terminaux T₁, T₂, T₃ sont connectés à la passerelle d'adaptation par un réseau de communication N_{T}. Les terminaux peuvent communiquer avec le serveur distant B grâce à un portail P, également connecté au réseau de communication N_{T}. Ce portail peut présenter un site web, permettant à des navigateurs (« browser », en anglais) installés sur certains des terminaux d'entrer des paramètres et des choix (informations d'adaptation et sélection d'une diffusion).

Un même utilisateur U peut disposer de plusieurs terminaux T₂, T₃. Un de ces terminaux peut disposer d'un tel navigateur et peut permettre à l'utilisateur U de modifier les informations d'adaptation pour ce terminal, mais aussi pour l'autre terminal qui peut ainsi être dépourvu d'un navigateur.

Ce navigateur peut être adapté pour le protocole HTTP, mais aussi pour les protocoles WAP, i-mode ou autres, de même que le portail P. Il est possible donc d'accéder aux informations d'adaptation I_{A} à partir d'un terminal mobile de téléphonie ou d'un assistant numérique personnel, à travers du portail P.

Un réseau de communication N connecte également la passerelle d'adaptation PA à un site de production « Site ». Ce site de production dispose de plusieurs sources S₁, S₂, S₃ connectées entre-elles par un réseau de communication N₅, local au site. Dans le cas où le site correspond au lieu où se déroule un événement sportif tel des jeux olympiques ou une coupe internationale, chaque source peut correspondre à un stade ou une salle de sport, ou bien à une caméra.

Ce réseau de communication N_{S} associé au site est connecté à un réseau de communication N, qui peut être le réseau Internet. Ce réseau N permet la diffusion des flux audio-vidéo produit par les sources S₁, S₂, S₃. À ce réseau de communication N, peut être connecté un serveur de réplication R. Le but d'un tel serveur est de stocker, de façon temporaire, tout ou partie des flux audio-vidéo produit par le site de production. Il permet à aux clients (utilisateurs des terminaux) d'accéder à ces flux de façon différée et non plus temps réel.

Ainsi, lorsque l'utilisateur d'un terminal accède au portail pour choisir un flux audio-vidéo, il peut se voir proposer d'une part les flux audio-vidéo accessibles en temps-réel directement depuis les sources S₁, S₂, S₃, et d'autre part les flux audio-vidéo mémorisés sur le serveur de réplication R.

Accessoirement, ce serveur de réplication R peut servir de mémoire tampon. Même pour l'accès à des flux audio-vidéo temps-réel, la diffusion peut se faire à partir de ce serveur de réplication. Une telle mise en oeuvre minimise le trafic et donc la charge du réseau de communication N : en effet, si plusieurs clients souhaitent recevoir un même flux audio-vidéo, celui-ci n'est alors diffusé qu'une unique fois entre la source et le serveur de réplication R. Ce n'est qu'à partir du serveur de réplication R que le flux peut être divisé en autant de flux qu'il existe de clients.

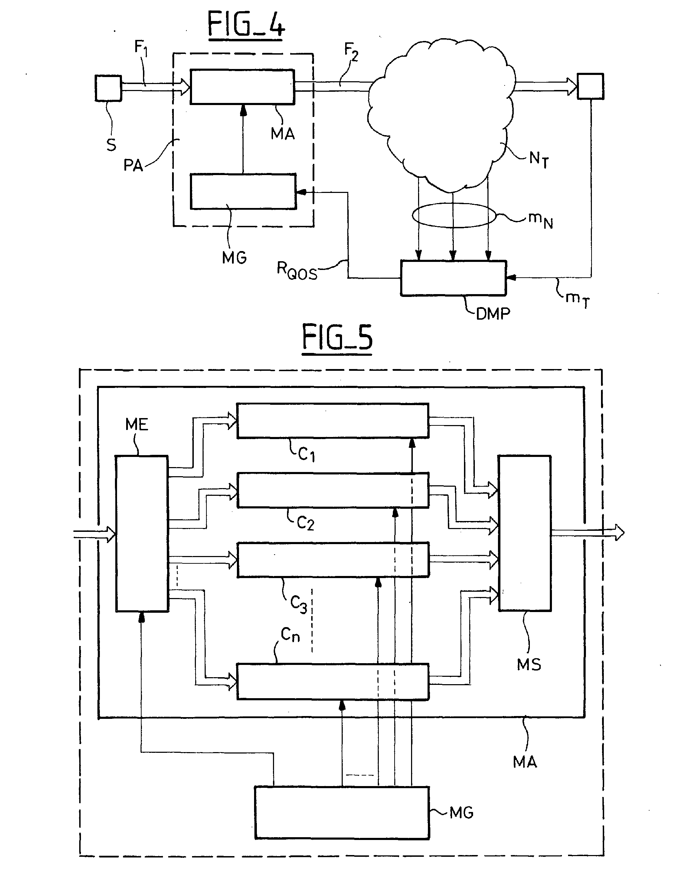

La figure 4 illustre un mode de réalisation de l'invention mettant en oeuvre un dispositif de mesure de performances DMP. Une telle mise en oeuvre permet d'adapter dynamiquement le paramétrage de la passerelle d'adaptation PA, de sorte à faire dépendre l'adaptation qu'elle offre des performances offertes par le réseau de communication.

Ce dispositif de mesure de performances DMP est apte à acquérir des informations de performances m_{N} représentative du réseau de communication N_{T} connectant la passerelle d'adaptation PA au terminal audio-vidéo T.

Le dispositif de mesure de performance DMP est ainsi à même de déterminer une qualité de service associée à la diffusion du flux audio-vidéo adapté F₂ vers le terminal T : débit, gigue entre les paquets, perte de paquets etc.

La qualité de service ainsi déterminée R_{QoS} peut être transmise aux moyens de gestion MG de la passerelle d'adaptation PA. Autrement dit, les moyens de gestion MG de la passerelle d'adaptation PA sont prévus pour recevoir des informations de qualité de service R_{QoS}

En fonction de cette qualité de service R_{QoS}, les moyens de gestion peuvent reconfigurer les moyens d'adaptation afin d'améliorer la situation. Ainsi, si un problème est relevé pour une caractéristique de qualité de service, il pourra choisir un encodeur-décodeur (CODEC) moins sensible à cette caractéristique, ou bien il pourra configurer différemment l'encodeur-décodeur utilisé.

Selon une mise en oeuvre de l'invention, le dispositif de mesure de performances DMP peut également recevoir des informations provenant de l'utilisateur du terminal T, indiquant que la qualité perçue est jugée inférieure ou supérieure à son intérêt.

Selon un mode de réalisation de l'invention, le terminal audio-vidéo T est apte à transmettre automatiquement des informations de performances m_{T} vers le dispositif de mesure de performances DMP. Pour ce faire, il peut disposer d'un environnement d'exécution tel qu'une machine Java™ et recevoir lors du déclenchement de la transmission d'un flux audio-vidéo, une application Java prévue pour effectuer des mesures de performance localement et renvoyer des informations de performances m_{T}.

Grâce à ce mode de réalisation, le dispositif de mesure de performance DMP peut avoir une estimation de la qualité de service réellement perçue par l'utilisateur du terminal T. La reconfiguration des moyens d'adaptation MA peut donc être davantage pertinent.

## Revendications

1. Passerelle d'adaptation (PA) de flux audio-vidéo permettant la transmission de flux audio-vidéo véhiculés au travers d'un réseau de communication de données depuis au moins une source (S) jusque à au moins un terminal audio-vidéo (T) connecté à ladite passerelle, et comportant des moyens d'adaptation (MA) pour convertir lesdits flux audio-vidéo (F₁) reçus de ladite au moins une source en des flux adaptés (F₂) avant transmission vers le ou lesdits terminaux (T), **caractérisé en ce qu'**elle comporte en outre des moyens de gestion (MG) prévus pour recevoir d'un serveur distant (B), des informations d'adaptation (I_{A}) relatives à l'interface homme-machine dudit ou desdits terminaux et/ou aux utilisateurs dudit ou desdits terminaux, et pour paramétrer les moyens d'adaptation (MA) en fonction de ces informations d'adaptation (I_{A}).

2. Passerelle d'adaptation selon la revendication 1, possédant en outre des moyens d'ajout (M₁, M₂) permettant l'ajout d'insertions (I_{F}, I_{B}) dans les flux adaptés F₂ transmis audit ou auxdits terminaux.

3. Passerelle d'adaptation selon la revendication précédente, dans laquelle un premier moyen d'ajout (M₁) est disposé en amont dudit moyen d'adaptation (MA) afin d'ajouter une ou plusieurs insertions sous la forme de flux audio-vidéo secondaires (I_{F}) dans lesdits flux audio-vidéo (F₁), de sorte que ledit ou lesdits flux audio-vidéo secondaires (I_{F}) soient adaptés par lesdits moyens d'adaptation (MA) de la même façon que lesdits flux audio-vidéo (F₁).

4. Passerelle d'adaptation selon la revendication 2, dans laquelle un second moyen d'ajout (M₂) est disposé en aval dudit moyen d'adaptation (MA) afin d'ajouter une ou plusieurs insertions sous la forme de bandeaux ou d'images fixes (I_{B}) dans lesdits flux adaptés (F₂).

5. Passerelle d'adaptation selon l'une des revendications 2 à 4, dans laquelle lesdits moyens d'ajout sont aptes à récupérer lesdites insertions (I_{F}, I_{B}) depuis une base d'insertion (BC), préférablement distante de ladite passerelle d'adaptation.

6. Passerelle d'adaptation selon l'une des revendications 2 à 5, dans laquelle lesdits moyens de gestion (MG) déterminent les insertions ajoutées par lesdits moyens d'ajout (M₁, M₂) en fonction d'un taux contenu dans lesdites informations d'adaptation (I_{A}), balançant le nombre et/ou la durée desdits insertions et la tarification de la transmission dudit flux audio-vidéo (F₁, F₂).

7. Passerelle d'adaptation selon l'une des revendications 2 à 6, dans laquelle lesdits moyens de gestion (MG) déterminent les insertions ajoutées par lesdits moyens d'ajout (M₁, M₂) en fonction d'un profil des centres d'intérêts dudit ou desdits utilisateurs, contenu dans lesdites informations d'adaptation (I_{A}).

8. Passerelle d'adaptation selon l'une des revendications précédentes, dans laquelle lesdits moyens de gestion (MG) sont également prévus pour recevoir des informations de qualité de service (R_{QoS}) émise par un dispositif de mesure de performances, représentatives au moins d'informations de performances (m_{N}) relatives au réseau de communication (N_{T}) connectant ladite passerelle d'adaptation (PA) audit ou auxdits terminaux (T).

9. Passerelle d'adaptation selon la revendication précédente, dans lequel lesdits moyens de gestions (MG) sont aptes à recevoir des informations de qualité de service (R_{QoS}) également représentatives d'informations de performance (m_{T}) provenant dudit ou desdits terminaux (T).

10. Réseau de communication pour la transmission de flux audio-vidéo depuis au moins une source (S) jusqu'à au moins un terminal audio-vidéo (T), au travers d'une passerelle d'adaptation comportant des moyens d'adaptation (MA) pour convertir lesdits flux audio-vidéo (F₁) reçus de ladite au moins une source en des flux adaptés (F₂) avant transmission vers le ou lesdits terminaux (T), **caractérisé en ce que** ladite passerelle d'adaptation (PA) comporte en outre des moyens de gestion (MG) prévus pour recevoir d'un serveur distant (B), des informations d'adaptation (I_{A}) relatives à l'interface homme-machine dudit ou desdits terminaux et/ou aux utilisateurs dudit ou desdits terminaux, et pour paramétrer les moyens d'adaptation (MA) en fonction de ces informations d'adaptation (I_{A}).

11. Réseau de communication selon la revendication précédente, dans lequel ledit serveur distant (B) dispose de moyen pour recevoir des informations d'un portail (P), notamment un site web, et pour déterminer lesdites informations d'adaptation (I_{A}) à partir de ces informations reçues.

12. Réseau de communication selon la revendication 10, dans lequel ledit serveur distant (B) dispose de moyen pour recevoir des informations dudit au moins un terminal, par un protocole de signalisation, et pour déterminer lesdites informations d'adaptation (I_{A}) à partir de ces informations reçues.

13. Réseau de communication selon l'une des revendications 10 à 12, comportant une passerelle d'adaptation (PA) selon l'une des revendications 1 à 9.

14. Procédé de transmission de flux audio-video au travers d'un réseau de communication de données depuis au moins une source jusqu'à au moins un terminal audio-vidéo, consistant à faire passer lesdits flux audio-vidéo par une passerelle d'adaptation comportant des moyens d'adaptation pour convertir lesdits flux audio-vidéo reçus de ladite au moins une source en des flux adaptés avant transmission vers le ou lesdits terminaux, **caractérisé en ce que** des moyens d'adaptation au sein de ladite passerelle vont chercher sur un serveur distant des informations d'adaptation relatives à l'interface homme-machine dudit ou desdits terminaux et/ou aux utilisateurs dudit ou desdits terminaux et paramètrent les moyens d'adaptation en fonction de ces informations.
